# EUROPÄISCHE PATENTSCHRIFT

(11) **EP 0 472 103 B1**
(45) Veröffentlichungstag und Bekanntmachung des Hinweises auf die Patenterteilung: **04.05.1994**
(21) Anmeldenummer: 91113614.1
(22) Anmeldetag: 14.08.1991
(51) Int. Cl.: A01B 45/02

(54) **Vertikutierer**
Scarifier
Scarificateur

(30) Priorität: 24.08.1990 DE 4026738
(43) Veröffentlichungstag der Anmeldung: 26.02.1992
(73) Patentinhaber: SABO-MASCHINENFABRIK AKTIENGESELLSCHAFT, D-51645 Gummersbach (DE)
(72) Erfinder: Gräfer, Rainer, W-5270 Gummersbach (DE); Ostermeier, Heinrich, W-5000 Köln 90 (DE)
(74) Vertreter: Harwardt, Günther, Dipl.-Ing.

(56) Entgegenhaltungen:
- EP-A- 0 304 659
- DE-A- 2 834 057
- FR-A- 1 490 422
- GB-A- 1 454 900
- GB-A- 1 540 217
- GB-A- 2 164 231

## Beschreibung

Die Erfindung betrifft einen Vertikutierer für die Rasenpflege, mit einem Gehäuse, das auf ortsfest daran angebrachten Rädern auf der zu bearbeitenden Rasenfläche bewegbar ist, mit einer Messervelle, auf der mehrere Messer drehfest und mit Abstand voneinander angeordnet sind, mit mitteln zur Verstellung der Arbeitsstellung der Messerwelle im Gehäuse und mit einem Motor zum drehenden Antreiben der Messerwelle.

Ein derartiger Vertikutierer ist aus der DE 28 34 057 A1 bekannt. Die Enden der Messerwelle sind in Lagern aufgenommen, die durch eine Klemmverbindung, die auch Rasten aufweisen kann, am Gehäuse festlegbar ist. Die Verstellung kann jedoch nur bei stillstehendem Gerät und nur entsprechend der Stufung der Rasten erfolgen. Dies ist umständlich und ungenau. Beim Wenden ist es erforderlich, das Gehäuse des Gerätes durch Schwenken um die Achse der Vorder- oder Hinterräder anzuheben, um einen Kontakt der Messer mit der zu bearbeitenden Rasenfläche zu vermeiden. Dies bringt die Gefahr mit sich, daß die rotierende Messerwelle leichter zugänglich wird. Erfolgt kein Anheben beim Wenden, wird die Rasenfläche abgefräst und damit beschädigt. Ferner ist für das Anheben eine größere Kraftanstrengung erforderlich.

Vertikutierer werden dafür eingesetzt, die sich mit der Zeit zwischen den einzelnen Graspflänzchen bildende Filzschicht zu entfernen. Diese entsteht insbesondere durch abgetretene oder abgestorbene Grashalme, Reste vom Rasenmähen, Moos und Unkraut. Im Laufe der Zeit kann diese Filzschicht eine Dicke von mehreren Zentimetern annehmen. Die Dicke hängt von der Wasserzufuhr, die der Rasen erhält, von der Bodenbeschaffenheit, Düngung und der Belastung der Rasenfläche durch Spielen und Betreten ab. Durch die Filzschicht werden das für das Gedeihen der Pflanzen wichtige Wasser und die darin enthaltenen Nährstoffe an der Oberfläche zurückgehalten. Die Pflanze kann sie daher nicht mehr über die Wurzel aufnehmen. Darüberhinaus verhindert die Filzschicht den Sauerstoffaustausch zwischen Boden und Oberfläche. Für die Entfernung des Rasenfilzes werden Vertikutierer eingesetzt. Bekannte Vertikutierer arbeiten mit auf einer drehend angetrieben Welle rotierenden Messern, die in die Rasenfläche einschneiden. Um eine gezielte und vorsichtige Entfernung des Filzes ggfs. in mehreren Arbeitsgängen vornehmen zu können, ist eine genaue Einstellung der Eindringtiefe der Messer in die zu bearbeitende Rasenfläche erforderlich. Bevorzugt sollen nämlich die Messer eine Eindringtiefe von wenigen Millimetern nicht überschreiten. Darüberhinaus sollen sie nur den Filz entfernen, nicht jedoch die Graspflanzen in erheblichem Maße angreifen.

Bei handgeführten und motorgetriebenen Vertikutierern ist es bekannt, eine Höhenverstellung der Räder gegenüber dem Gehäuse vorzusehen, um die Eindringtiefe der Vertikutiermesser in dem Boden zu regeln.

Dabei sind die Räder an einem am Gehäuse gelagerten und für beide Räder gekoppelten Kurbelgestänge angebracht. Hierbei wird das Gestänge von einer Stellschraube beaufschlagt, welche jedoch nur in Kontakt mit dem Gestänge ist und am Gehäuse verstellbar gehalten ist. Dies erlaubt ein Anheben des Gehäuses durch ein weiteres Schnellverstellgestänge, was unmittelbar am Kurbelgestänge angreift. Da die Stellschraube sich nur am Kurbelgestänge abstützt, entfernt sich diese beim Ausheben von der Anlagefläche ungehindert. Die für das Abheben der Messerwelle zu bewegende Masse ist groß. Es muß nämlich das Gehäuse mit Messerwelle und Motor angehoben werden. Mit der Entkopplung von Stellschraube und Kurbelgestänge der Räder ist jedoch die Gefahr gegeben, daß sich Schmutz am Kurbelgestänge und auf der Kontaktfläche absetzt und dadurch die Rückführung auf die eingestellte Tiefenposition nicht garantiert ist. Ferner verändert sich der Bodenabstand der Verkleidung beim gänzlichen Ausheben sowie auch bei der Tiefeneinstellung. Dies bedeutet das eher ein unbeabsichtigter Eingriff und Kontakt mit der Messerwelle durch die Bedienungsperson auftreten kann als in tiefster Absenkstellung. Beim Überfahren von härteren Bodenschichten oder Steinen besteht die Möglichkeit, daß sich die Arbeitstiefe selbsttätig verändert, da auf die Messerwelle Kräfte einwirken, die diese mit dem Gehäuse vom Boden abhebt.

Der Erfindung liegt die Aufgabe zugrunde, einen Vertikutierer vorzuschlagen, bei dem sich die Lage des Gehäuses während des Betriebes, bei der Tiefeneinstellung oder beim Ausheben der Messer für das Wenden nicht ändert.

Diese Aufgabe wird erfindungsgemäß dadurch gelöst, daß die Messerwelle über eine Schnellverstellung von der zu bearbeitenden Rasenfläche in eine gänzlich ausgehobene Stellung oder in eine abgesenkte Stellung, in der sich die Messer zur Rasenfläche in Arbeitsstellung befinden, in Gehäuse bewegbar ist und daß die Mittel zur Vertellung der Arbeitsstellung der Messerwelle auf die Schnellverstellung einwirken.

Durch diese Anordnung ist es möglich, eine vereinfachte Einstellung der Messer gegenüber der zu bearbeitenden Rasenfläche hinsichtlich der Eindringtiefe zu erreichen, welche konstant bleibt.

Von Vorteil ist ferner, daß beim Wenden eine Verstellung erfolgen kann, ohne daß ein Entfernen des Gehäuses vom Boden eintritt. Hierdurch wird auch ein Beitrag zu einer sicheren Handhabung geleistet. Das Anheben bringt nämlich die Gefahr mit sich, daß die rotierende Messerwelle leichter zugänglich wird. Ferner wird das Ausheben leichter, weil nur die Messerwelle bewegt wird.

Ein weiterer wesentlicher Vorteil ist durch die ortsfeste Lagerung der Räder im Gehäuse auch insofern gegeben, als in einfacher Weise der Abstreifer am Gehäuse befestigt oder als Gehäusebestandteil ausgebildet sein kann. Eine solche Anbringung von Abstreifern ist bei Vertikutierern, bei denen die Räder beispielsweise auf einer Kurbelachse angeordnet sind und bei denen eine Lageveränderung gegenüber dem Gehäuse zur Höhenverstellung erfolgt, nicht möglich. Der Abstreifer müßte dem Achsschenkel zugeordnet werden. Der Aufbau am Radumfang bedeutet, daß eine konstante Tiefeneinstellung bezüglich der Eindringtiefe der Messer in die Filzschicht bzw. die Rasenoberfläche nicht gewährleistet werden kann. Es ergibt sich somit ein ungleiches und über die Rasenfläche sehr unterschiedliches Vertikutierergebnis. Es hat sich nämlich gezeigt, daß beim Einschneiden in die Erdoberfläche möglichst eine konstante Einschneidtiefe von etwa 3 mm nicht überschritten werden sollte. Bei der erfindungsgemäßen Lösung kann die Einschnittiefe über die gesamte Fläche konstant gehalten werden. Dies wird noch dadurch unterstützt, daß in Ausgestaltung der Erfindung die Messerwelle in der abgesenkten Arbeitsstellung über eine Verriegelungseinrichtung verriegelbar ist.

Bevorzugt ist in weiterer Ausgestaltung vorgesehen, daß zur Höhenverstellung die Messerwelle an einer Schwinge gelagert ist.

In weiterer Ausgestaltung ist vorgeschlagen, die Schwinge aus zwei an den Enden einer Welle befestigten Schwenkarmen herzustellen, die an ihren freien Enden mit Lagern für die Messerwelle versehen sind. Die Welle, an der die Schwenkarme angebracht sind, ist am Gehäuse schwenkbar gelagert.

Bevorzugt ist die Messerwelle zur Schnellaushebung von einer Feder in Richtung ausgehobener Stellung beaufschlagt. Wird die Wirkung der Feder freigegeben, kann die Messerwelle in die ausgehobene Stellung selbsttätig verschwenken.

Zur Festlegung der Arbeitsstellung ist vorgesehen, daß die Messerwelle in der abgesenkten Arbeitsstellung über eine Verriegelungseinrichtung verriegelbar ist. Die Verriegelung nimmt die Reaktionskräfte auf. Hierdurch wird die Einhaltung der einmal eingestellten Einschneidetiefe auch nach kurzzeitigem Ausheben gewährleistet.

Besonders günstige Ergebnisse werden dann erreicht, wenn zur Höhenverstellung eine Schnellverstellung zum gänzlichen Ausheben oder zur Bewegung und Abstützung der Messerwelle in Arbeitsstellung und zusätzlich eine zur Regulierung der Eindringtiefe der Messer gestaltete Tiefeneinstellung vorhanden sind. Die Schnellverstellung dient lediglich zum Außer- oder Ineingriffbringen der Messerwelle. Hierdurch kann beispielsweise an den Wendepunkten bei der Bearbeitung einer Rasenfläche ein Ausheben erfolgen. Dies bringt zusätzlich einen Sicherheitsbeitrag, da das Gerät mit den Rädern grundsätzlich auf dem Boden aufstehend ohne Änderung des Bodenabstandes verbleibt. Die Regulierung der Eindringtiefe der Messer erfolgt über eine separate Tiefeneinstellung, welche eine den Erfordernissen entsprechende feine Einstellung zuläßt. Diese kann konstant beibehalten werden und wird von der Aushebung bzw. der Überführung der Messer in die Arbeitsstellung oder Aushebestellung nicht berührt. Es ist also an den Wendepunkten keine erneute Einregulierung erforderlich, wenn die Messerwelle ausgehoben worden ist.

Günstige Einbauverhältnisse und Verstellverhältnisse ergeben sich dann, wenn wie vorgeschlagen, die Messerwelle von einem endlosen, biegsamen Treibglied, insbesondere einem Keilriemen, Zahnriemen, Profilriemen oder einer Kette angetrieben ist, welches über entsprechend gestaltete Antriebsscheiben des Motors, der Messerwelle und über eine gegen Federkraft verstellbare Spannrolle geführt ist. Die Veränderung der Lage der Spannrolle unter der Kraft der Feder kann beispielsweise genutzt werden, um die Messerwelle schnell auszuheben.

Aus diesem Grunde ist in bevorzugter Ausgestaltung vorgesehen, die Spannrolle an einem schwenkbar am Gehäuse gelagerten Spannhebel anzubringen, wobei die Spannfeder am Spannhebel einerseits und am Gehäuse andererseits angreift.

Zur Freigabe der Schwinge zur Bewegung in die Aushebestellung und Rückführung und Blockierung in der Arbeitsstellung ist nach einem weiteren Gedanken der Erfindung vorgeschlagen, eine Stützrolle vorzusehen, die endseitig an einem Stellhebel gelagert ist und auf die Schwinge einwirkt. Sie hält die Schwinge dadurch in Arbeitsstellung, daß sie gegen einen Anschlag einerseits und über den Stellhebel an einem verstellbaren Widerlager andererseits, an dem der Stellhebel gelenkig befestigt ist, abgestützt ist. Das verstellbare Widerlager dient der Tiefeneinstellung. Der bewegbare Anschlag dient dazu, die Stützrolle freizugeben oder die Schwinge in der abgesenkten Arbeitsstellung zu blockieren. Das verstellbare Widerlager ermöglicht auch eine Einstellung in abgesenkter Stellung. Die Tiefeneinstellung wird durch die Schnellverstellung der Stützrolle nicht beeinflußt, d.h. sie ist unabhängig von dem Betätigungsmechanismus für die Blockade der Stützrolle bzw. der Bewegung derselben in bzw. außer Wirkstellung für das Absenken- bzw. Ausheben der Messerwelle. Alternativ kann vorgesehen sein, daß die Schwinge von einem Kniehebelgestänge beaufschlagt ist, dessen einer Hebel gelenkig an einem verstellbaren Widerlager und dessen anderer Hebel gelenkig an der Schwinge befestigt ist und daß an deren gemeinsamen Gelenkstelle eine Betätigungsstange angreift, welche zwischen zwei festlegbaren Stellungen bewegbar ist.

Bevorzugt wird der Anschlag von einer an der Stützrolle angelenkten Betätigungsstange und einem zwischen zwei Stellungen über einen Betätigungshebel verstellbaren Verstellglied gebildet. Die Betätigungsstange ist gelenkig an der Stützrolle und gelenkig an dem Verstellglied angebracht. Das Verstellglied mit dem Betätigungshebel ist in unmittelbarer Reichweite des Griffholmes für die Betätigungsperson angebracht, um an den Wendepunkten oder für die Transportstellung ein Ausheben der Messerwelle und Bewegung derselben in die Arbeitsstellung in einfacher Weise zu ermöglichen.

Ferner ist vorgesehen, die Stützrolle zur Begrenzung der Aushebebewegung der Messerwelle an einem Anschlag abzustützen.

Eine bevorzugte Ausgestaltung des verstellbaren Widerlagers sieht vor, daß dieses aus einer in einer Führung höhenverstellbaren Gewindemutter, an der der Stellhebel angelenkt ist, und einer ortsfest am Gehäuse abgestützten und über einen Betätigungsknopf drehbaren Gewindespindel besteht. Über die Steigung des Gewindes kann die Feinheit der Regulierungsmöglichkeit für die Tiefeneinstellung beeinflußt werden.

Die Verstellung kann auch dadurch erleichtert werden, daß der Betätigungsknopf und das Gehäuse des Vertikutierers mit einer Stellanzeige versehen sind, welche der Bedienungsperson anzeigt, welche Anzahl von Umdrehungen erforderlich ist, um die gewünschte Arbeitstiefe zu erreichen. Dies kann durch vorsichtiges Einregulieren derart geschehen, daß festgestellt wird, ob die rotierenden Messer die zu bearbeitende Oberfläche des Rasens ankratzen. Anschließend kann eine gezielte Tiefeneinstellung erfolgen. Dies wird insbesondere dann erleichtert, wenn die Nullstellung, bei der die Messer gerade die Oberfläche ankratzen, festgehalten werden kann. Hierzu kann beispielsweise eine der beiden Stellanzeigen als verstellbare Schleppskala gestaltet sein.

Ein bevorzugtes Ausführungsbeispiel der Erfindung ist in der Zeichnung schematisch dargestellt.

Es zeigt
- Figur 1: eine Seitenansicht auf die Antriebsseite des Vertikutierers bei entfernter seitlicher Abdeckung,
- Figur 2: einen Querschnitt durch die Anordnung der Schwinge mit der Messerwelle,
- Figur 3: eine Einzelheit bezüglich einer ersten Alternative der Schwingenlagerung mit Verstellung und Tiefenregulierung (Ansicht X von Figur 2)
- Figur 4: eine Einzelheit bezüglich einer zweiten Alternative zu Figur 3,

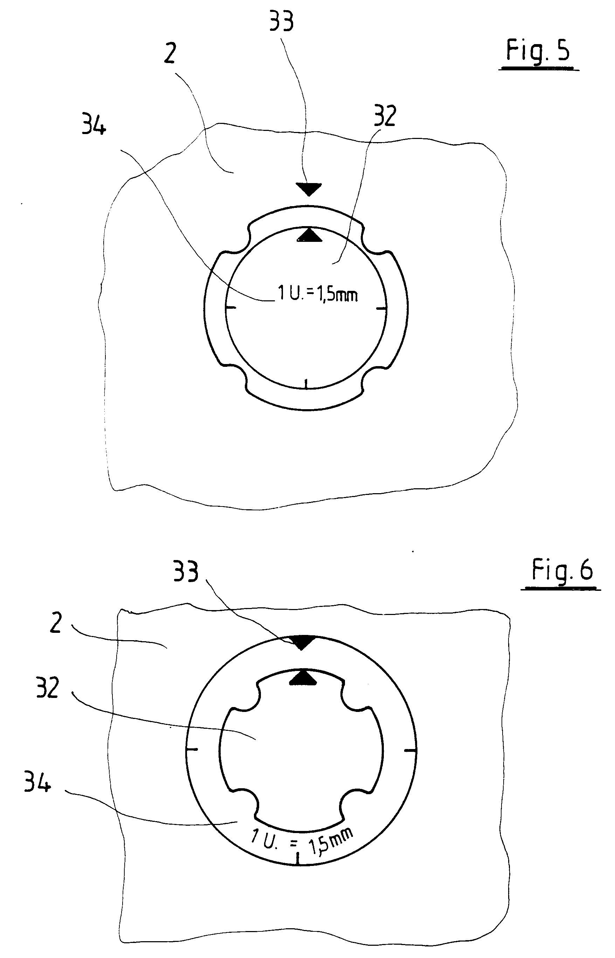

- Figur 5: eine Einzelheit bezüglich der Tiefeneinstellung für die Messer und
- Figur 6: eine Alternative zu Figur 5.

Der in den Zeichnungsfiguren dargestellte Vertikutierer 1 ist ein handgeführtes Gerät, bei dem das Gehäuse 2, auf Rädern 3, die um die Radachsen 4 drehbar sind, bewegbar ist. An dem Gehäuse 2 ist ein Holm 5 angebracht, an welchem die Bedienungsperson angreift und den Vertikutierer 1 auf den Rädern 3 auf der Rasenfläche 7 bewegt. Den vier Rädern 3 sind Abstreifer 6 zugeordnet, die am Gehäuse 2 angebracht sind oder Bestandteil des Gehäuses 2 sein können. Die Abstreifer 6 verhindern, daß sich im Verlaufe der Bearbeitung der Rasenfläche 7 ausgeworfenes Gut an den Radumfangsflächen aufbaut und damit eine Lagenveränderung des Gehäuses 2 und der Radachsen 4 gegenüber der Rasenfläche 7 eintritt.

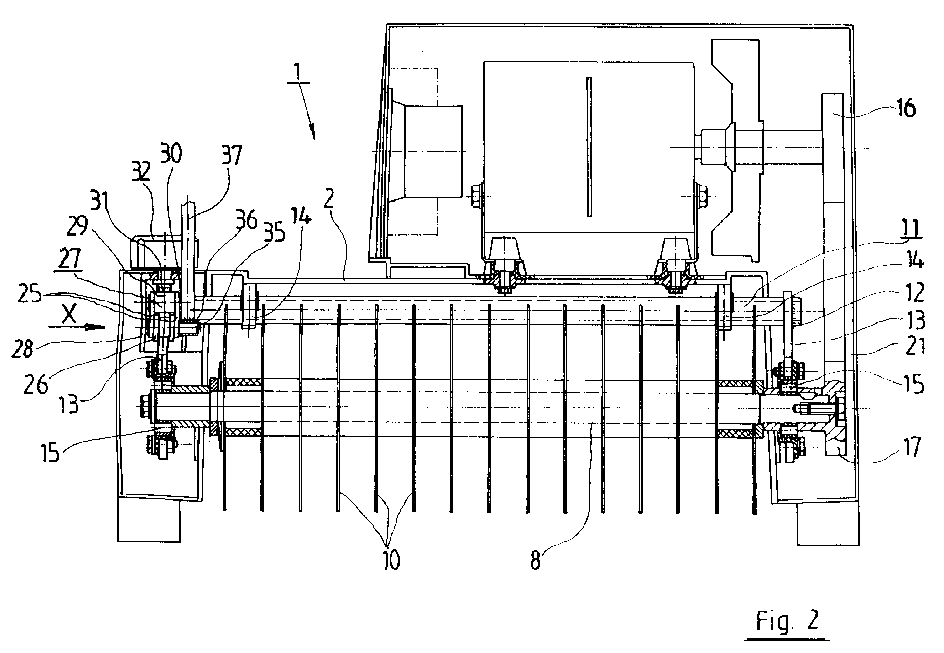

Zur Bearbeitung der Rasenfläche 7 ist eine Messerwelle 8 vorgesehen, deren Messer 10 von einem Motor 9 drehend angetrieben werden. In Figur 2 ist erkennbar, daß es sich um einzelne im Abstand voneinander angeordnete und mit der Messerwelle 8 rotierende Messerscheiben 10 mit umfangsverteilten Zähnen oder dergleichen Elemente handelt.

Die Messerwelle 8 ist an einer Schwinge 11 befestigt, welche schwenkbar am Gehäuse 2 gelagert ist. Die Schwinge 11 besteht aus im parallelen Abstand zueinander angeordneten Schwenkarmen 13, die an den Enden der Welle 12 beispielsweise angeschweißt sind. Die Welle 12 ist in Lagern 14 des Gehäuses 2 schwenkbar aufgenommen. Die freien Enden der Schwenkarme 13 tragen Lager 15 für die Messerwelle 8. An einem Ende der Messerwelle 8 ist eine Riemenscheibe 17 über einen Keil drehfest aufgenommen und durch eine Schraube an der Stirnfläche der Messerwelle 8 befestigt. Die Lager 15 an den Enden der Schenkarme 13 umfassen Wälzlager, die Bestandteil von anschraubbaren Flanschlagern sind. Der Motor 9 trägt auf seiner Antriebswelle eine Riemenscheibe 16.

Des weiteren ist eine Spannrolle 18 vorgesehen, die an einem Ende eines Spannhebels 19 drehbar befestigt ist und wobei der Spannhebel 19 in einem Schwenklager 20 schwenkbar am Gehäuse 2 angebracht ist. Der Spannhebel 19 wird von einer Spannfeder 23 beaufschlagt. Die Spannfeder 23 greift an einem Anlenkpunkt 22 des Spannhebels 19 an, der über das Schwenklager 20 hinausgeführt ist. Ferner greift die Spannfeder 23 an einem Widerlager 24 des Gehäuses 2 an.

Bevorzugt wird zum Antrieb ein Profilriemen 21 genutzt, der über die Riemenscheibe 16 des Motors 9 und die Spannrolle 18 und die Riemenscheibe 17 der Messerwelle 8 geführt ist. Der Außenumfang der Riemenscheiben 16, 17 ist profiliert ausgebildet, während die Außenfläche der Spannrolle 18 bevorzugt glatt ausgebildet ist. Die Spannrolle 18 beaufschlagt den Profilriemen 21 aufgrund der Spannfeder 23 im Sinne der Verkürzung des Abstandes der Riemenscheibe 16 zur Riemenscheibe 17 der Messerwelle 8. Hierdurch wird die Schwinge 11 im Sinne des Aushebens der Messerwelle 8 und damit der Messer 10 beaufschlagt. Bei Bewegung der Spannrolle 18 unter der Spannfeder 23 um das Schwenklager 20 schwenken die Schwenkarme 13 der Schwinge 11 um das Lager 14 von der Rasenfläche 7 weg nach oben, wobei sich gleichzeitig die Messer 10 der Messerwelle 8 von der Rasenfläche 7 nach oben entfernen.

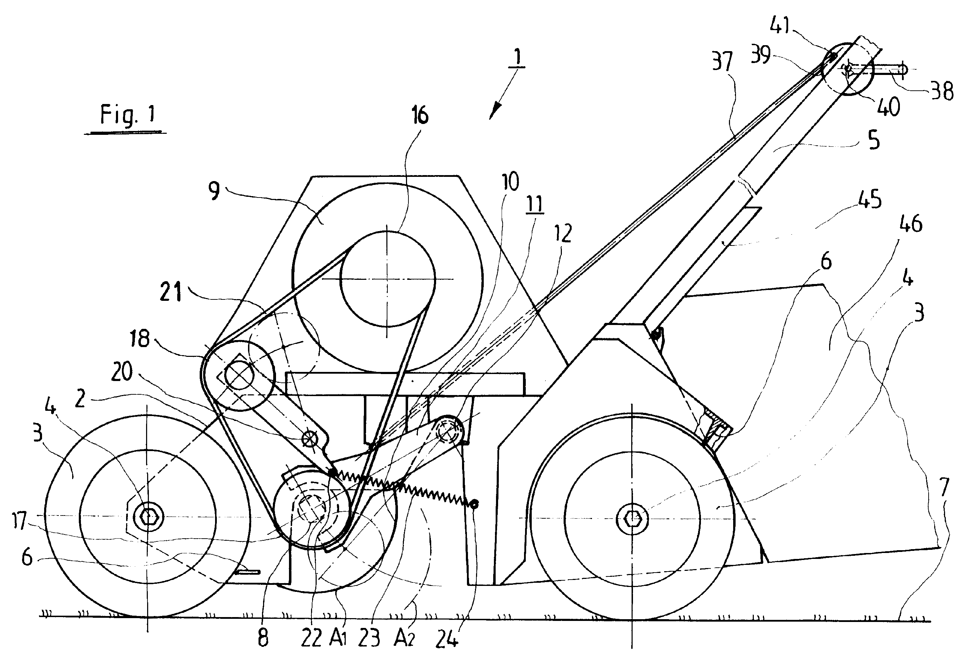

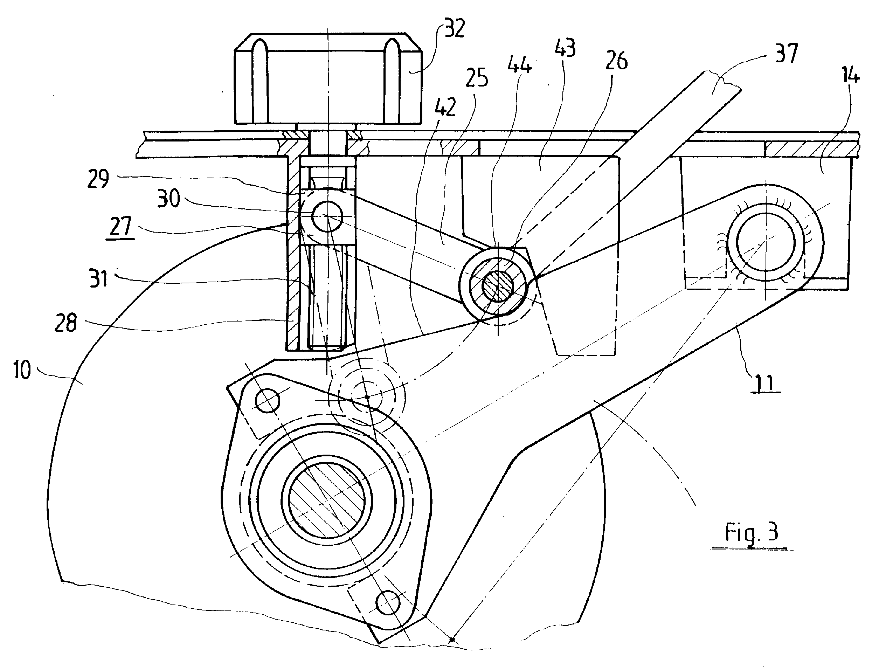

Zur Bewegung der Schwinge 11 in die abgesenkte Stellung und zum Halten derselben in der daraus resultierenden Arbeitsstellung ist eine an einem Stellhebel 25 angebrachte Stützrolle 26 vorgesehen, die auf einen Schwenkarm 13 der Schwinge 11 einwirkt. Dies ist insbesondere aus Figur 3 ersichtlich, wo dies als Einzelheit dargestellt ist. Der Stellhebel 25 ist schwenkbar an einem Widerlager 27 befestigt. Das Widerlager 27 ist verstellbar. Es besteht aus einer Führung 28, die von an dem Gehäuse 2 angebrachten Führungsstegen gebildet ist. Zwischen den Führungsstegen ist eine Gewindemutter 29 geführt, von der seitlich Gelenkzapfen 30 abstehen, auf welchen die zwei seitlichen Laschen, die den Stellhebel 25 bilden, gelenkig aufgenommen sind. Die beiden Laschen des Stellhebels 25 nehmen die Stützrolle 26 zwischen sich auf. Hierzu ist durch die Stützrolle 26 ein Schwenkzapfen 25 hindurchgeführt. Auf dem seitlich herausragenden Ende des Schwenkzapfens 35 ist eine Hülse 36 festgelegt. Die Gewindemutter 29 wird von einer Gewindespindel 31 durchdrungen, welche mit einem scheibenartigen Ansatz nach oben gegen das Gehäuse 2 abgestützt ist. Die Gewindespindel 31 ist nach oben aus dem Gehäuse 2 herausgeführt. Das aus dem Gehäuse 2 herausragende Ende ist mit einem Betätigungsknopf 32 versehen. Der Betätigungsknopf 32 und das Gehäuse 2 können mit einer Stellanzeige 33, 34 versehen sein. Von diesen kann eine als eine Art Schleppskala gebildet sein, d. h. verstellbar ausgebildet sein, um eine Nullstellung einstellen zu können. Die Stellanzeige kann eine dem Gehäuse 2 zugeordnete feste Markierung 33 und eine Schleppskala 34 in Form einer mit Markierungen versehenen Scheibe, die am Betätigungsknopf 32 relativ zu diesem verschiebbar ist, umfassen. Alternativ kann dem Gehäuse 2 eine Markierungen aufweisende und verdrehbare Scheibe als Schleppskala 34 und dem Knopf 32 eine feste Markierung 33 als Stellanzeige zugeordnet sein. Bei Verdrehung des Betätigungsknopfes 33 wird über die Spindel 31 die Gewindemutter 29 in der Führung 28 in ihrer Höhenlage verändert. Hierdurch verändert sich auch die Lage der über den Stellhebel 25 und die Gelenkzapfen 30 an der Gewindemutter 29 befestigten Stützrolle 26. Die Stützrolle 26 stützt sich auf einer Lauffläche 42, die durch eine Schmalseite eines Schwenkarmes 13 gebildet ist, ab. Sie kann beispielsweise so gestaltet sein, daß sie die Schmalflächen übergreift und mit ihren Borden führt. Die Drehachse der Stützrolle 26 wird durch den Schwenkzapfen 35 gebildet, der seitlich aus den beiden den Stellhebel 25 bildenden Laschen, die zwischen sich die Stützrolle 26 aufnehmen, herausragt. Auf diesem herausragenden Ende des Schwenkzapfens 35 ist eine Hülse 36 festgelegt, die an einem Ende einer Betätigungsstange 37 befestigt ist. Die Betätigungsstange 37 ist nach oben in die Nähe des Querholms des Führungsholms 5 geführt. Sie ist mit ihrem anderen Ende über eine Gelenkstelle 41 an einem als Scheibe gestalteten Verstellglied 39 befestigt. Die als Verstellglied 39 gestaltete Scheibe ist schwenkbar im Gelenklager 40 an dem Holm 5 angebracht. Die Scheibe 39 ist über einen Betätigungshebel 38 verschwenkbar und wirkt je nach Betätigungsrichtung ziehend oder drückend auf die Betätigungsstange 37 ein. Hierdurch wird die Stützrolle 26 entweder nach oben von der Anlage zur Lauffläche 42 um die Gelenkzapfen 30 der Gewindemutter 29 weg oder in Anlage zu der Lauffläche 42 gedrückt. Dabei wird die Schwinge 11 freigegeben, so daß sie unter der Kraft der Spannfeder 23 und Wirkung der Spannrolle 18 nach oben in die ausgehobene Stellung A1 gemäß Figur 1 verschwenkt werden kann. Bei Einwirkung im drückenden Sinne wird die Schwinge 11 in den Lagern 14 nach unten auf die Rasenfläche 7 zu verschwenkt und gleichzeitig in der Endstellung dadurch blockiert, daß die Stützrolle 26 durch die Betätigungsstange 37 und das Verstellglied 39 gegen weitere Verschiebung gesichert ist. Hierzu kann beispielsweise die Verstellscheibe 39 zwei Verschwenkpositionen einnehmen, von denen eine eine Art Totpunktverriegelung darstellt.

In der ausgehobenen Stellung läuft die Stützrolle 26 gegen die Anschlagkontur 44 eines gehäusefesten Anschlages 43 an. In dieser Stellung wird ein weiteres Anheben der Messerwelle 8 verhindert. Es soll hierdurch ein Anlaufen der Messer 10 gegen die Innenfläche des Gehäuses 2 vermieden werden. Die Anschläge 43 sind so ausgebildet, daß die Schwinge 11 durch Übergreifen der Schwenkarme 13 seitlich geführt wird.

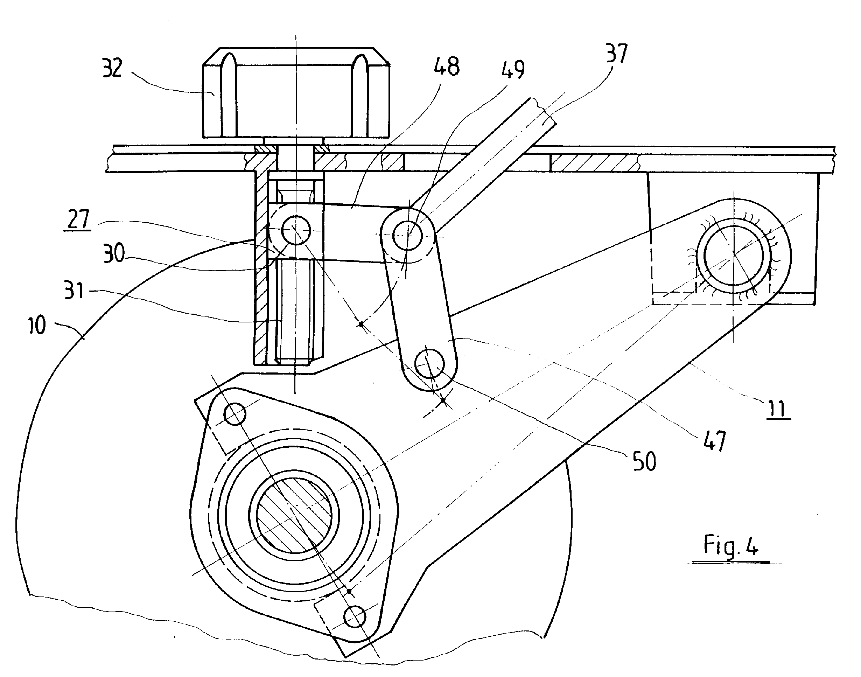

Der durch die Bewegung der Betätigungsstange 37 bedingten Lageveränderung der Schwinge 11 und damit der Messer 10 der Rasenfläche gegenüber und auch bei Blockierung in der abgesenkten Stellung kann eine zusätzliche Lageveränderung noch durch Verstellung der Gewindemutter 29 in der Führung 28 überlagert werden. Die Stützrolle 26 kann dadurch so beaufschlagt werden, daß sie auf den Schwenkarm 13 so einwirkt, daß dieser die Schwinge 11 weiter in Richtung auf die Rasenfläche 7 nach unten verschwenkt. Hierdurch ist eine Feinregulierung der Einschneidtiefe der Messer 10 in die Rasenfläche 7 gegeben. Die erreichbare Maximalstellung ist mit A2 bezeichnet. Sie stellt die Kontur des Rotationsdurchmessers der Messer 10 in der tiefsten Stellung dar. Mit A1 ist der Rotationskreis der Messer 10 in der ausgehobenen Stellung bezeichnet. Es ist auch eine alternative Ausbildung der Verstellung möglich, so wie in Figur 4 dargestellt. Es sind wiederum zwei Laschen an den Gelenkzapfen 30 angelenkt, die den Hebel 48 bilden. An dem Schwenkarm 13 ist ein anderes Paar Laschen an der Gelenkstelle 50 angelenkt, welche den Hebel 47 bilden. Beide Hebel 47, 48 sind zusammen mit einem Ende der Betätigungsstange 37 an der Gelenkstelle 49 gelenkig durch einen Gelenkzapfen miteinander verbunden. Es wird hierdurch eine Kniehebelbetätigung gebildet. Die Betätigung entspricht der im Zusammenhang mit der Ausführung nach Figur 3 beschriebenen.

Durch die drehende Messerwelle 8 wird das von den Messern 10 ausgeschnittene Gut nach hinten in Richtung auf den Führungsholm 5 innerhalb der Gehäusekontur befördert. Es gelangt über eine Auswurfklappe 45, die bei Anbringen eines Fangsackes 46 nach oben verschwenkt wird, in den zur Sammlung bestimmten Fangsack.

Als Antrieb für die Messer 10 der Messerwelle 8 kommen entweder ein Benzinmotor oder aber auch ein Elektromotor in Betracht. Es ist auch denkbar, daß zusätzlich für eine Untersetzung noch ein Getriebe vorgesehen ist, welches die Motordrehzahl absenkt. In einem solchen Falle wäre dann die Riemenscheibe 16 Bestandteil eines solchen Getriebes. Ferner ist es auch denkbar, daß zusätzlich ein Radantrieb für die Hinterräder vorgesehen ist, der vom Hauptantrieb abgezweigt ist.

### Bezugszeichenliste

- 1: Vertikutierer
- 2: Gehäuse
- 3: Räder
- 4: Radachsen
- 5: Holm
- 6: Abstreifer
- 7: Rasenfläche
- 8: Messerwelle
- 9: Motor
- 10: Messer
- 11: Schwinge
- 12: Welle
- 13: Schwenkarme
- 14: Lager für Schwinge
- 15: Lager für Messerwelle
- 16: Riemenscheibe des Motors
- 17: Riemenscheibe der Messerwelle
- 18: Spannrolle
- 19: Spannhebel
- 20: Schwenklager des Spannhebels
- 21: Profilriemen
- 22: Anlenkpunkt für Spannfeder
- 23: Spannfeder
- 24: Widerlager für Spannfeder am Gehäuse
- 25: Stellhebel
- 26: Stützrolle
- 27: Widerlager für Stellhebel
- 28: Führung
- 29: Gewindemutter
- 30: Gelenkzapfen
- 31: Gewindespindel
- 32: Betätigungsknopf
- 33,34: Stellanzeige/Schleppskala
- 35: Schwenkzapfen für Betätigungsstange
- 36: Hülse
- 37: Betätigungsstange
- 38: Betätigungshebel
- 39: Verstellglied
- 40: Gelenklager
- 41: Gelenkstelle
- 42: Lauffläche für Stützrolle
- 43: Anschlag für Stützrolle
- 44: Anschlagkontur
- 45: Auswurfklappe
- 46: Fangsack
- 47, 48: Hebel
- 49, 50: Gelenkpunkt

## Patentansprüche

1. Vertikutierer (1) für die Rasenpflege, mit einem Gehäuse (2), das auf ortsfest daran angebrachten Rädern (3) auf der zu bearbeitenden Rasenfläche (7) bewegbar ist, mit einer Messerwelle (8), auf der mehrere Messer (10) drehfest und mit Abstand voneinander angeordnet sind, mit Mitteln zur Verstellung der Arbeitsstellung der Messerwelle (8) im Gehäuse (2) und mit einem Motor (9) zum drehenden Antreiben der Messerwelle (8),
dadurch gekennzeichnet,
daß die Messerwelle (8) über eine Schnellverstellung zu der zu bearbeitenden Rasenfläche (7) in eine gänzlich ausgehobene Stellung oder in eine abgesenkte Stellung, in der sich die Messer (10) zur Rasenfläche (7) in Arbeitsstellung befinden, im Gehäuse (2) bewegbar ist und daß die Mittel zur Verstellung der Arbeitsstellung der Messerwelle (8) auf die Schnellverstellung einwirken.

2. Vertikutierer nach Anspruche 1,
dadurch gekennzeichnet,
daß die Messerwelle (8) in der abgesenkten Arbeitsstellung (A2) über eine Verriegelungseinrichtung verriegelbar ist.

3. Vertikutierer nach Ansprüch 1,
dadurch gekennzeichnet,
daß die Messerwelle (8) an einer Schwinge (11) gelagert ist.

4. Vertikutierer nach Anspruch 3,
dadurch gekennzeichnet,
daß die Schwinge (11) aus zwei an den Enden einer Welle (12) befestigten Schwenkarmen (13) besteht, die an ihren freien Enden mit Lagern (15) für die Messerwelle (8) versehen sind und wobei die Welle (12) am Gehäuse (1) schwenkbar gelagert ist.

5. Vertikutierer nach einem oder mehreren der Ansprüche 1 bis 4,
dadurch gekennzeichnet,
daß die Messerwelle (8) von einer Feder (23) in Richtung ausgehobener Stellung (A1) beaufschlagt ist.

6. Vertikutierer nach Anspruch 1,
dadurch gekennzeichnet,
daß die Messerwelle (8) von einem endlosen, biegsamen Treibglied, insbesondere einem Keilriemen, Zahnriemen, Profilriemen (21) oder einer Kette angetrieben ist, welches über entsprechend gestaltete Antriebsscheiben (16, 17) des Motors (9) und der Messerwelle (8) und über eine gegen Federkraft (Spannfeder 23) verstellbare Spannrolle (18) geführt ist.

7. Vertikutierer nach den Ansprüchen 5 und 6,
dadurch gekennzeichnet,
daß die Spannrolle (18) an einem schwenkbar am Gehäuse (2) gelagerten Spannhebel (19) angebracht ist und die Spannfeder (23) am Spannhebel (19) einerseits und am Gehäuse (2) andererseits angreift.

8. Vertikutierer nach den Ansprüchen 1 und 3,
dadurch gekennzeichnet,
daß die Schwinge (11) von einer endseitig an einem Stellhebel (25) gelagerten Stützrolle (26) beaufschlagt ist, die in Arbeitsstellung einerseits gegen einen Anschlag und andererseits über den Stellhebel (25) an einem verstellbaren Widerlager (27), an dem Stellhebel (25) gelenkig befestigt ist, blockiert abgestützt ist.

9. Vertikutierer nach den Ansprüchen 1 und 4,
dadurch gekennzeichnet,
daß die Schwinge (11) von einem Kniehebelgestänge (47, 48, 37) beaufschlagt ist, dessen einer Hebel (48) gelenkig an einem verstellbaren Widerlager (27) und dessen anderer Hebel (47) gelenkig an der Schwinge (11) befestigt ist und daß an deren gemeinsamen Gelenkstelle (49) eine Betätigungsstange (37) angreift, welche zwischen zwei festlegbaren Stellungen bewegbar ist.

10. Vertikutierer nach Anspruch 8,
dadurch gekennzeichnet,
daß der Anschlag von einer an der Stützrolle (26) angelenkten Betätigungsstange (37), welche an einem über einen Betätigungshebel (38) zwischen zwei Stellungen verstellbaren Verstellglied (39) angreift, gebildet ist.

11. Vertikutierer nach Anspruch 8,
dadurch gekennzeichnet,
daß die Stützrolle (26) zur Begrenzung der Aushebebewegung der Messerwelle (8) an einem Anschlag (43) abgestützt ist.

12. Vertikutierer nach Anspruch 1,
dadurch gekennzeichnet,
daß den Rädern (3) Abstreifer (6) zugeordnet sind.

13. Vertikutierer nach Anspruch 8,
dadurch gekennzeichnet,
daß das verstellbare Widerlager (27) aus einer in einer Führung (28) höhenverstellbaren Gewindemutter (29), an der der Stellhebel (25) angelenkt ist, und einer ortsfest am Gehäuse (2) abgestützten und über einen Betätigungsknopf (32) drehbaren Gewindespindel (31) besteht.

14. Vertikutierer nach Anspruch 13,
dadurch gekennzeichnet,
daß der Betätigungsknopf (32) und das Gehäuse (2) mit einer Stellanzeige (33, 34) versehen sind.

15. Vertikutierer nach Anspruch 14,
dadurch gekennzeichnet,
daß eine der beiden Stellanzeigen (33, 34) als verstellbare Schleppskala ausgebildet ist.

## Claims

1. A scarifier (1) for lawn care purposes, having a housing (2) which may be moved on the lawn area (7) to be worked by wheels (3) non-adjustably attached to said housing, having a cutter shaft (8) provided with a plurality of cutters (10) fast with the shaft and spaced relative to one another, having means for adjusting the working position of the cutter shaft (8) in the housing (2), and having a motor (9) for rotatingly driving the cutter shaft (8), characterised in
that, via quick adjusting means, the cutter shaft (8) may be moved in the housing (2) relative to the lawn area (7) to be worked into a fully lifted position or into a lowered position in which the cutters (10) are in the working position relative to the lawn area (7) and that the means for adjusting the working position of the cutter shaft (9) act on the quick adjusting means.

2. A scarifier according to claim 1,
characterised in
that in the lowered working position (A2), the cutter shaft (8) is lockable via a locking device.

3. A scarifier according to claim 1,
characterised in
that the cutter shaft (8) is supported at a rocker (11).

4. A scarifier according to claim 3,
characterised in
that the rocker (11) consists of two pivot arms (13) which are secured to the ends of a shaft (12) and which, at their free ends, are provided with bearings (15) for the cutter shaft (8), the shaft (12) being pivotably supported at the housing (1).

5. A scarifier according to any one or several of claims 1 to 4,
characterised in
that the cutter shaft (8) is loaded by a spring (23) in the direction of the lifted position (A1).

6. A scarifier according to claim 1,
characterised in
that the cutter shaft (8) is driven by a continuous, flexible driving member, especially a V-belt, toothed belt, profiled belt (21) or chain guided by suitably designed driving plates (16, 17) of the motor (9) and cutter shaft (8) and by a tensioning pulley (18) adjustable against a spring force (tensioning spring 23).

7. A scarifier according to claims 5 and 6,
characterised in
that the tensioning pulley (18) is attached to a tensioning lever (19) pivotably supported in the housing (2) and that the tensioning spring (23) acts on the tensioning lever (19) on the one hand and on the housing (2) on the other hand.

8. A scarifier according to claims 1 and 3,
characterised in
that the rocker (11) is loaded by a supporting roller (26) which is supported at one end of an adjusting lever (25) and which, in the working position, is supported, so as to be blocked, against a stop on the one hand and, on the other hand, at an adjustable abutment (27) securing the adjusting lever (25) in an articulated way.

9. A scarifier according to claims 1 and 4,
characterised in
that the rocker (11) is loaded by toggle lever rods (47, 48, 37) whose one lever (48) is secured in an articulated way at an adjustable abutment (27) and whose other lever (47) is secured to the rocker (11) in an articulated way, and that their joint articulation point (49) is acted upon by an actuating rod (37) which is movable between two positions to be determined.

10. A scarifier according to claim 8,
characterised in
that the stop is formed by an actuating rod (37) which is articulated at the supporting roller (26) and which acts on an adjusting member (39) adjustable between two positions by an actuating lever (38).

11. A scarifier according to claim 8,
characterised in
that for the purpose of limiting the lifting movement of the cutter shaft (8), the supporting roller (26) is supported on a stop (43).

12. A scarifier according to claim 1,
characterised in
that a stripper (6) is associated with the wheels (3).

13. A scarifier according to claim 8,
characterised in
that the adjustable abutment (27) consists of a threaded nut (29) whose height position is adjustable in guiding means (28) and which holds the adjusting lever (25) in an articulated way, and of a threaded spindle (31) which is supported at the housing (2) so as to be stationary and which is rotatable by means of an actuating button (32).

14. A scarifier according to claim 13,
characterised in
that the actuating button (32) and the housing (2) are each provided with an indicating device (33, 34).

15. A scarifier according to claim 14,
characterised in
that one of the two indicating devices (33, 34) is designed as an adjustable follower scale.

## Revendications

1. Scarificateur (1) pour l'entretien du gazon, comprenant un corps (2) qui peut se déplacer, par des roues (3) montées fixes sur la machine, sur une surface de gazon (7) qu'il s'agit de traiter, un arbre porte-lames (8) sur lequel plusieurs lames (10) sont montées solidairement en rotation et disposées à une certaine distance l'une de l'autre, des moyens servant à régler la position de travail de l'arbre porte-lames dans le corps, et un moteur (9) servant à entraîner l'arbre porte-lames (8) en rotation,
caractérisé en ce que
l'arbre porte-lames (8) peut être déplacé dans le châssis (2) au moyen d'in dispositif de réglage rapide, par rapport à la surface du gazon (7) à travailler à une position entièrement relevée ou à une position abaissée dans laquelle les lames (10) se trouvent en position de travail par rapport à la surface du gazon (7), et en ce que les moyens servant à régler la position de travail de l'arbre porte-lames (8) agissent sur le dispositif de réglage rapide.

2. Scarificateur selon la revendication 1,
caractérisé
en ce que l'arbre porte-lames (8) peut être verrouillé dans la position de travail abaissée (A2) au moyen d'un dispositif de verrouillage.

3. Scarificateur selon la revendication 1,
caractérisé
en ce que l'arbre porte-lames (8) est monté rotatif sur un balancier (11).

4. Scarificateur selon la revendication 3,
caractérisé
en ce que le balancier (11) est composé de deux bras oscillants (13) fixés aux extrémités d'un arbre (12), qui sont munis de paliers (15) pour l'arbre porte-lames (8) à leurs extrémités libres, l'arbre (12) étant monté pivotant dans le châssis (1).

5. Scarificateur selon une ou plusieurs des revendications 1 à 4,
caractérisé
en ce que l'arbre porte-lames (8) est sollicité par un ressort (23) en direction de la position relevée (A1).

6. Scarificateur selon la revendication 1,
caractérisé
en ce que l'arbre porte-lames (8) est entraîné par un organe de transmission sans fin, flexible, notamment par une courroie trapézoïdale, une courroie crantée, une courroie profilée (21) et une chaîne, qui passe sur des poulies d'entraînement de configuration appropriée (16, 17) du moteur (9) et de l'arbre porte-lames (8), et sur un galet de tension (18) qu'on peut régler à l'encontre d'une forme élastique (ressort de tension 23).

7. Scarificateur selon les revendications 5 et 6,
caractérisé
en ce que le galet de tension (18) est monté sur un levier de tension (19) qui est monté pivotant dans le châssis (2), et le ressort de tension (23) attaque, d'une part, le levier de tension (19) et, d'autre part, le châssis (2).

8. Scarificateur selon les revendications 1 et 3,
caractérisé
en ce que le balancier (11) est sollicité par un galet d'appui (26) qui tourillonne à une extrémité d'un levier de commande (25) et qui, dans la position de travail, est appuyé en position bloquée, d'une part contre une butée et, d'autre part, par l'intermédiaire du levier de commande (25) contre une contre-butée réglable (27), à laquelle le levier de commande (25) est fixé de façon articulée.

9. Scarificateur selon les revendications 1 et 4,
caractérisé
en ce que le balancier (11) est sollicité par une tringlerie à genouillère (47, 48, 37) dont une biellette (48) est fixée de façon articulée sur une contre-butée réglable (27) et dont l'autre biellette (47) est fixée de façon articulée au balancier (11) et en ce que leur point d'articulation commun (49) est attaqué par une tringle d'actionnement (37) qui peut se déplacer entre deux positions verrouillables.

10. Scarificateur selon la revendication 8,
caractérisé
en ce que la butée est formée par une tringle d'actionnement (37) articulée sur le galet d'appui (26), qui attaque un organe de réglage (39) qu'on peut déplacer entre d'eux positions par l'intermédiaire d'un levier d'actionnement (38).

11. Scarificateur selon la revendication 8,
caractérisé
en ce que le galet d'appui (26) prend appui contre une butée (43) pour limiter le mouvement de relèvement de l'arbre porte-lames (8).

12. Scarificateur selon la, revendication 1,
caractérisé
en ce que des raclettes (6) sont associées aux roues (3).

13. Scarificateur selon la revendication 8,
caractérisé
en ce que la contre-butée réglable (27) est constituée par un écrou (29) qu'on peut régler en hauteur dans un guide (28), et auquel le levier de commande (25) est articulé, et d'une vis (31) prenant appui sur le châssis (2) en un point fixe et qu'on peut faire tourner au moyen d'un bouton d'actionnement (32).

14. Scarificateur selon la revendication 13,
caractérisé
en ce que le bouton d'actionnement (32) et le châssis (2) sont équipés d'un indicateur de position (33, 34).

15. Scarificateur selon la revendication 14,
caractérisé
en ce que l'un des deux indicateurs de position (33, 34) est constitué par une graduation glissante réglable.
